(19) Europäisches Patentamt
European Patent Office
Office européen des brevets

(11) Veröffentlichungsnummer: **0 097 398**
**B1**

(12) # EUROPÄISCHE PATENTSCHRIFT

(45) Veröffentlichungstag der Patentschrift: **29.01.86**

(51) Int. Cl.⁴: **C 07 F 7/22**, A 01 N 55/04

(21) Anmeldenummer: **83200860.1**

(22) Anmeldetag: **14.06.83**

(54) **Organozinnverbindungen und ihre Verwendung als Schädlingsbekämpfungsmittel.**

(30) Priorität: **23.06.82 DE 3223335**

(43) Veröffentlichungstag der Anmeldung: **04.01.84 Patentblatt 84/1**

(45) Bekanntmachung des Hinweises auf die Patenterteilung: **29.01.86 Patentblatt 86/5**

(84) Benannte Vertragsstaaten: **AT BE CH DE FR GB IT LI LU NL SE**

(56) Entgegenhaltungen:
**FR - A - 1 513 145**
**FR - A - 2 194 446**
**US - A - 3 264 177**
**US - A - 3 923 998**

(73) Patentinhaber: **NORDDEUTSCHE AFFINERIE AG, Alsterterrasse 2, D-2000 Hamburg 36 (DE)**

(72) Erfinder: **Ploss, Hartmut, Dr., Sierichstrasse 88, D-2000 Hamburg 60 (DE)**

(74) Vertreter: **Fischer, Ernst, Dr., Reuterweg 14, D-6000 Frankfurt am Main 1 (DE)**

EP 0 097 398 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft neue schwefelhaltige Organozinnverbindungen, ihre Herstellung und Verwendung als Schädlingsbekämpfungsmittel.

Es ist bekannt, dass Organozinnverbindungen eine hohe Wirksamkeit gegen Mikroorganismen, wie Pilze, Bakterien und Algen, sowie gegen Insekten, Milben, Mollusken und andere Kleinlebewesen entfalten. Dabei ist von besonderer Bedeutung, dass sie physikalisch, chemisch und biochemisch zu nicht toxischen anorganischen Zinnverbindungen abgebaut werden, im Gegensatz zu anderen Schwermetalle, wie Kupfer oder Quecksilber, in organischer oder anorganischer Bindung enthaltenden Bioziden. Ein weiterer Vorteil der Organozinnverbindungen ist ihre Wirksamkeit auch bei Schädlingen, die gegen herkömmliche Biozide bereits resistent sind.

Aus DE-PS 950 970 ist ein Mittel zur Bekämpfung von Mikroorganismen, wie Fungi, Bakterien und Protozoen, bekannt, dessen Aktivkomponente eine Organozinnverbindung der allgemeinen Formel $R_3SnX$ ist. In dieser Formel stellt $R_3$ beliebige gleiche oder verschiedene Organoreste dar. Der Beschreibung ist zu entnehmen, dass unter R der Methyl-, Äthyl-, Propyl-, Butyl- oder Phenylrest zu verstehen ist. In der allgemeinen Formel $R_3SnX$ kann X = OH, O-acyl, O-alkyl, SH, S-alkyl, S-aryl, $SO_2$-alkyl, $SO_2$-aryl, $NHSO_2$-alkyl oder $NHSO_2$-aryl bedeuten. Die betreffenden Alkyl- und Arylgruppen können substituiert oder nicht substituiert sein. Die Druckschrift macht jedoch keinerlei Angaben darüber, wie die Triorganozinnverbindung beschaffen ist, wenn ein Alkyl- oder Arylrest über ein Schwefelatom mit dem Zinnatom verknüpft sein soll.

Es ist ferner bekannt, durch gezielte Auswahl der organischen, am Zinnatom hängenden Gruppen das Toxizitätsprofil zu ändern. So entstehen bei Ersatz von Butylgruppen durch Cyclohexylgruppen gut wirksame, aber kaum pflanzenschädliche Tricyclohexylzinnverbindungen. So ist es bekannt, dass Tricyclohexylzinnhydroxid (Cyhexatin) (DE-OS 1542863) und Tricyclohexylzinntriazol (AZO-cyclotin) eine langanhaltende nicht systemische Wirkung gegen bewegliche Spinnmilbenstadien, auch gegen resistente Arten, besitzen.

Weiterhin lassen sich in Tricyclohexylzinnverbindungen durch Einführen von geeigneten bioziden Gruppen über die vierte Valenz des Zinnatoms Verbindungen mit synergistisch verbesserter Wirkung aufbauen. Beispielsweise werden in DE-OS 1542863 arachnizide Mittel auf Basis von Tricyclohexylzinnverbindungen beschrieben, in denen die vierte Valenz des Zinnatoms durch einen Alkyl- oder Alkylenrest abgesättigt ist, wie Lauryltricyclohexylzinn oder Oleyl-tricyclohexylzinn. Auch kann die Verknüpfung über ein Schwefelatom erfolgen, dessen freie Valenz über einen Alkanoyl- oder Benzoylrest abgesättigt ist, wie Lauroylthiotricyclohexylzinn. Dieser Druckschrift ist jedoch eine Verknüpfung der vierten Restvalenz des Zinnatoms mit einem Thioalkyl- oder Thioalkylenrest nicht zu entnehmen.

Hinsichtlich der biologischen Aktivität sind alle diese Verbindungen für eine ausreichende Bekämpfung der Schadorganismen aber noch zu gering wirksam, was sich besonders bei der Milbenbekämpfung bemerkbar macht.

Nach einem aus DE-OS 2059279 bekannten Vorschlag werden daher u.a. auch schwefelhaltige Trihexylzinnverbindungen beschrieben, worin das Schwefelatom mit Zinn und mit einer niederen Alkylgruppe verbunden ist. Eine andere niedere Alkylgruppe als die 3-Chlorpropylgruppe ist der Druckschrift nicht zu entnehmen. Die vorbekannten Organozinnverbindungen stellen zwar brauchbare Insektizide dar, sie sind aber nur begrenzt anwendbar, da sie bei vielen Pflanzen zu phytotoxischen Schäden führen.

Der Erfindung liegt die Aufgabe zugrunde, ein Schädlingsbekämpfungsmittel bereitzustellen, das absolut pflanzenverträgliche Verbindungen enthält und das eine erhöhte biologische Aktivität, insbesondere gegen Spinnmilben aufweist.

Zur Lösung der Aufgabe stellt die Erfindung neue schwefelhaltige Tricyclohexylzinnverbindungen bereit. Die neuen schwefelhaltigen Tricyclohexylzinnverbindungen haben die allgemeine Formel

$$(C_6H_{11})_3\,Sn-SR,$$

worin R ein gerad- oder verzweigtkettiges Alkyl oder Alkenyl mit 8 bis 25 C-Atomen ist, welches ggf. durch Halogen oder Nitrogruppen substituiert ist. Insbesondere ist der Rest R ein Alkyl oder Alkenyl mit 8 bis 15 C-Atomen, welchegegebenenfalls durch Halogen oder Nitrogruppen substituiert ist. Gemäss der Erfindung enthalten neue Verbindungen des vorgenannten Typs beispielsweise den Dodecyl-, Dipropylheptyl-, Undecenyl- oder Octylrest, der jeweils mit dem Schwefel verknüpft ist.

Es wurde weiter gefunden, dass die Tricyclohexylzinnverbindungen mit einem über die Zinn-Schwefel-Bindung verknüpften organischen Rest des Typs gemäss der Erfindung eine ausserordentlich starke Wirksamkeit als Schädlingsbekämpfungsmittel, insbesondere gegen Milben, Zecken und Insekten, besitzen. Dabei ist es besonders bemerkenswert, dass eine Beeinträchtigung der behandelten Pflanzen durch zu grosse Phytotoxizität auch bei hervorragendem Haftvermögen des Mittels an den Pflanzenteilen nicht eintritt.

In dem erfindungsgemässen Schädlingsbekämpfungsmittel weist der mit dem Schwefelatom verknüpfte Alkyl- oder Alkenylrest 8 Kohlenstoffatome auf und kann bis 25 C-Atome enthalten. Vorzugsweise enthält er 8 bis 15 Kohlenstoffatome und insbesondere 12 C-Atome. Die Wirksamkeit des Alkyl- oder Alkenylrestes kann durch Substituenten d.h. durch Halogen oder Nitrogruppen variiert werden. Es hat sich als günstig erwiesen, einen verzweigten Aufbau der Alkylkette in dem erfindungsgemässen Schädlingsbekämpfungsmittel vorzusehen. Eine derartige geeignete Verbindung ist beispielsweise das

Tricyclohexylzinn-6,6-dipropyl-heptylmercaptid.

Bevorzugte Organozinnverbindungen gemäss der Erfindung sind

Tricyclohexylzinn-octylmercaptid,
Tricyclohexylzinn-undecenylmercaptid,
Tricyclohexylzinn-dodecylmercaptid.

Die erfindungsgemässen Schädlingsbekämpfungsmittel auf Basis schwefelhaltiger Organozinnverbindungen wirken insbesondere als Milben-, Zecken- und Insektenbekämpfungsmittel. Ganz besonders wirken sie gegen sensible und resistente Acarina, wie z. B. Panonychus spp., Tetranychus spp., Eotetranychus carpini, Phyllocoptruta oleivora; gegen Ixoidea; gegen Insekten, wie z. B. Aonidiella aurantii, Trialeurodes vaporariorum, Dystercus cingulatus, Spodoptera littoralis, Adoxophyes reticulana, Leptinotarsa decemlineata, Laspeyresia pomonella, Heliothis virescens, einschliesslich deren Ei-Stadien, speziell der Wintereier.

Das erfindungsgemässe Schädlingsbekämpfungsmittel kann in einer üblichen Formulierung eingesetzt werden, wie Spritzpulver, Emulsion, Suspension, Granulat, wasserdispergierbares Granulat, wobei es dann ausser der aktiven Wirkstoffkomponente oder der Wirkstoffkombination noch die üblichen Formulierungshilfsmittel, wie z. B. Inertstoffe, Netz-, Dispergier- und Emulgiermittel enthält.

Die Aktivkomponente des erfindungsgemässen Schädlingsbekämpfungsmittels ist in diesem in einer Menge von 12 bis 80% und vorzugsweise in einer Menge von 25 bis 50% enthalten.

Für verschiedene Anwendungsgebiete wird das erfindungsgemässe Schädlingsbekämpfungsmittel in unterschiedlichen Mengenverhältnissen eingesetzt. Beispielsweise wird für die Behandlung von Pflanzen zwecks Bekämpfung von Schädlingen auf diesen die aktive Wirkstoffkomponente zweckmässigerweise in einer Menge von etwa 0,1 bis 2,0 kg/ha verwendet. Bei der Behandlung von Tieren zur Bekämpfung von Ectoparasiten wird das Tier zweckmässiger in eine Lösung, enthaltend 100 bis 1000 ppm aktiver Verbindung, getaucht oder mit dieser besprüht.

Wenn mit dem erfindungsgemässen Schädlingsbekämpfungsmittel gleichzeitig und auch am selben Ort noch andere Schädlinge bekämpft werden sollen, so können dem erfindungsgemässen Mittel noch dementsprechende andere Stoffe zugegeben werden, beispielsweise Mittel zur Modifizierung des Pflanzenwachstums oder Herbizide zur Bekämpfung unerwünschter Vegetation.

Die neuen schwefelhaltigen Tricyclohexylzinnverbindungen der Erfindung werden nach einem Verfahren hergestellt, gemäss dem ein Tricyclohexylzinnhalogenid mit einem gerad- oder verzweigtkettigen Alkyl- oder Alkylenmercaptan mit 8 bis 25, vorzugsweise 8 bis 15 C-Atomen, welches ggf. durch Halogen oder Nitrogruppen substituiert ist, in einem nicht reaktiven flüssigen Medium in Gegenwart eines alkalischen Kondensationsmittels unter Rühren zur Reaktion gebracht, das Reaktionsprodukt in organischem Lösungsmittel aufgenommen und aus der gereinigten und getrockneten Lösung des Mercaptids das organische Lösungsmittel abgetrennt wird.

Zweckmässig wird Tricyclohexylzinnchlorid mit Octylmercaptan, Undecenylmercaptan, Dipropylheptylmercaptan oder Dodecylmercaptan zur Reaktion gebracht.

Die Umsetzung erfolgt unter starkem Rühren und Rückfluss in einem nicht reaktiven flüssigen Medium, wie Wasser, Aceton, Benzol oder Mischungen davon, unter Verwendung eines alkalischen Kondensationsmittels, wobei die Reaktionstemperatur auf 60° C ansteigt. Zweckmässig wird Alkalihydroxid und insbesondere Kaliumhydroxid verwendet. Bei der Umsetzung in Benzol wird Triäthylamin als alkalisches Kondensationsmittel verwendet. Das als ölige Phase anfallende Reaktionsprodukt wird in organischem Lösungsmittel aufgenommen und aus der organischen Phase das gebildete Alkalihalogenid mit Wasser ausgeschüttelt. Die organische Phase wird gründlich getrocknet und das Produkt durch Abtrennen des organischen Lösungsmittels bei vermindertem Druck gewonnen.

Die Erfindung wird anhand der nachstehenden Beispiele näher und beispielhaft erläutert.

Die Beispiele 1 bis 5 erläutern die Herstellung der aktiven Komponente des erfindungsgemässen Schädlingsbekämpfungsmittels. Das Beispiel 6 bezieht sich auf die Formulierung des erfindungsgemässen Mittels als Emulsion.

*Beispiel 1*

Herstellung von Tricyclohexylzinndodecylmercaptid
Tricyclohexyl$-$Sn$-$S$-(CH_2)_{11}-CH_3$

40,4 g Tricyclohexylzinnchlorid (0,1 Mol) werden in 30 ml Aceton und 130 ml Wasser suspendiert und anschliessend unter starkem Rühren 21 g Dodecylmercaptan (0,1 Mol) innerhalb von 2 Stunden zugegeben. Es werden sodann 5,6 g Kaliumhydroxid, in 100 ml Wasser gelöst, zugeführt und die Suspension während 30 Minuten weitergerührt. Aus der Suspension entsteht ein öliges Produkt, das in Äther aufgenommen und mit Wasser ausgeschüttelt wird. Die wässerige Schicht enthält 3,4 g ionogenes Chlor. Die ätherische Schicht wird über Magnesiumsulfat getrocknet und im Vakuum eingedampft. Man erhielt eine farb- und geruchlose Flüssigkeit. Sie zersetzte sich bei einer Temperatur von 265° C unter einem Druck von 360 mbar (270 mm Hg).

| *Analysenwerte* für $C_{30}H_{58}SSn$: | | | |
|---|---|---|---|
| Berechnet: | C 63,7 | H 10,3 | S 5,6% |
| Gefunden: | C 63,7 | H 10,5 | S 5,7% |

*Beispiel 2*

Herstellung von
Tricyclohexylzinn-6,6-dipropylheptylmercaptid
Tricyclohexyl$-$Sn$-$S$-(CH_2)_5-C(C_3H_7)_2-CH_3$

Das Verfahren des Beispiels 1 wurde wiederholt, jedoch wurde anstelle des Dodecylmercaptans 6,6-Dipropylheptylmercaptan verwendet. Man erhielt eine farblose und geruchlose Flüssigkeit, die sich bei einer Temperatur von 215° C unter einem Druck von 360 mbar (270 mm Hg) zersetzte.

*Analysenwerte* für $C_{31}H_{60}SSn$:

| | | | |
|---|---|---|---|
| Berechnet: | C 63,8 | H 10,4 | S 5,5% |
| Gefunden: | C 64,0 | H 10,5 | S 5,6% |

*Beispiel 3*

Herstellung von Tricyclohexylzinn-undecen-7-yl-mercaptid

Tricyclohexyl$-Sn-S-(CH_2)_6-CH=CH-C_3H_7$

Das Verfahren des Beispiels 1 wurde wiederholt, jedoch wurde anstelle des Dodecylmercaptans ein ungesättigter höherer Thiokohlenwasserstoff, Undecen-7-ylmercaptan, verwendet. Man erhielt eine farblose und dickflüssige Flüssigkeit, die sich bei einer Temperatur von 190°C unter einem Druck von 360 mbar (270 mm Hg) zersetzte.

*Analysenwerte* für $C_{29}H_{54}SSn$:

| | | | |
|---|---|---|---|
| Berechnet: | C 62,9 | H 9,8 | S 5,8% |
| Gefunden: | C 62,7 | H 9,7 | S 5,8% |

*Beispiel 4*

Herstellung von Tricyclohexylzinnoctylmercaptid
$(C_6H_{11})_3\,Sn-S-(CH_2)_7-CH_3$

Das Verfahren des Beispiels 1 wurde wiederholt, jedoch wurde anstelle des Dodecylmercaptans das n-Octylmercaptan eingesetzt. Man erhielt eine gelbliche und geruchlose Flüssigkeit, die sich bei einer Temperatur von 230°C unter einem Druck von 360 mbar (270 mm Hg) zersetzte.

*Analysenwerte* für $C_{26}H_{50}SSn$:

| | | | |
|---|---|---|---|
| Berechnet: | C 60,8 | H 9,8 | S 6,2% |
| Gefunden: | C 60,4 | H 9,7 | S 6,2% |

*Beispiel 5*

Herstellung von Tricyclohexylzinnhexadecylmercaptid
$(C_6H_{11})_3\,Sn-S-CH_2)_{15}-CH_3$

Das Verfahren des Beispiels 1 wurde wiederholt, jedoch wurde anstelle des Dodecylmercaptans das Hexadecylmercaptan eingesetzt. Man erhielt ein kristallin weisses Produkt mit einem Schmelzpunkt von 29°C.

*Analysenwerte* für $C_{34}H_{66}SSn$:

| | | | |
|---|---|---|---|
| Berechnet | C 65,3 | H 10,6 | S 5,1% |
| Gefunden: | C 65,0 | H 10,3 | S 5,2% |

*Beispiel 6*

Mit dem erfindungsgemässen Wirkstoff wurden Emulsionskonzentrate in an sich bekannter Weise durch Einrühren des Wirkstoffs in ein Xylol/Emulgator-Gemisch hergestellt. Der Emulgator bestand zu 40 Gew.% aus Tributylphenolpolyglykoläther und zu 60% aus Calciumalkylarylsulfonat.

Emulsionskonzentrate aus
25 Gew.% Wirkstoff
50 Gew.% Xylol
25 Gew.% Emulgator
wurden mit folgenden Wirkstoffen hergestellt:
Tricyclohexylzinn -dodecylmercaptid
» -dipropylheptylmercaptid
» -undecenylmercaptid
» -octylmercaptid
» -hexadecanylmercaptid.

In den folgenden Beispielen 7 bis 10 wird die überlegene biologische Wirksamkeit des erfindungsgemässen Schädlingsbekämpfungsmittels dargelegt. Hierzu wurde als Vergleichssubstanz Cyhexatin (Tricyclohexylzinnhydroxid) als handelsübliches zinnorganisches Akarizid herangezogen sowie Tricyclohexylzinn-pentylmercaptid, eine tricyclohexylzinnorganische Verbindung mit Zinn-Schwefelbindung und einer am Schwefelatom gebundenen niederen Alkylgruppe gemäss DE-OS 2059279.

*Beispiel 7*

Bekämpfte Species: Tetranychus urticae, rote Spinnmilbe

Methode:

Zwei Blätter tragende Bohnenpflanzen werden mit in Aceton gelöster Testverbindung bekannter Konzentration besprüht. Nach dieser Behandlung werden zwei Blattscheiben (3 cm Durchmesser) mit je 10 lebenden Milben belegt und die Blattscheiben auf einem feuchten Schaumgummipolster einer Atmosphäre relativer Luftfeuchtigkeit von 60% bei 25°C ausgesetzt. Unbehandelte und nur mit Aceton behandelte Blattscheiben dienen als Kontrollscheiben. Die Testdauer beträgt 3 Tage. Die Ergebnisse werden ausgedrückt in prozentualer Verminderung überlebender Milben im Vergleich zu unbehandelten Proben.

In der Tabelle sind die Ergebnisse aufgeführt. Die Wirksamkeit bzw. Aktivität des Wirkstoffes ist in % und seine Dosierung (a.i. = active ingredient) in g pro $cm^2$ angegeben.

| Dosierung ($10^{-x}$g a.i./$cm^2$) | x=7 | x=8 |
|---|---|---|
| | Aktivität (%) | |
| Verbindung des Beispiels 1 (Tricyclohexylzinndodecylmercaptid) | 100 | 100 |
| Verbindung des Beispiels 4 (Tricyclohexylzinn-octylmercaptid) | 100 | nicht getestet |
| Cyhexatin (Tricyclohexylzinnhydroxid) | 59 | 18 |
| $(C_6H_1)_3\,Sn-S-(CH_2)_4-CH_3$ | 40 | 23 |

(Unbehandelte Probe: 2% Mortalität)

*Beispiel 8*

Bekämpfte Species: Tetranychus urticae, fleckige Spinnmilben von sensitiven und von Phosalonresistenten Stämmen

Methode:

Eine gemischte Population der Spinnmilben wird auf Buschbohnenblätter aufgebracht (Probenzubereitung gemäss Beispiel 7). Die Proben werden mit der formulierten Testverbindung (25% Wirkstoff, 50% Xylol, 25% Emulgator; vgl. Beispiel 6) besprüht und sodann in einer Atmosphäre von 60% relativer Luftfeuchtigkeit bei 25° C während 7 Tagen gelagert.

Die Ergebnisse sind in nachstehender Tabelle aufgeführt. Das Ergebnis ist ausgedrückt als prozentuale Verminderung der Population gegenüber der unbehandelten Vergleichsprobe.

| Dosierung in % Wirkstoff | Aktivität (%) 0,003 | 0,001 | 0,0003 |
|---|---|---|---|
| | sensitiver Stamm | | |
| Verbindung d. Beispiels 1 | 98 | 74 | |
| Verbindung d. Beispiels 4 | 100 | 73 | |
| Cyhexatin | 97 | 8 | |
| Tricyclohexylzinn-pentylmercaptid | 32 | 12 | |
| | Phosalon-resistenter Stamm | | |
| Verbindung des Beispiels 1 | 99 | 95 | 65 |
| Verbindung des Beispiels 4 | 98 | 78 | nicht getestet |
| Cyhexatin | 98 | 83 | 10 |
| Tricyclohexylzinn-pentylmercaptid | 30 | 10 | nicht getestet |

*Beispiel 9*

Bekämpfte Species: Aonidiella aurantii, Kalifornische Rotschuppen

Methode:

Kartoffelknollen werden mit 50 bis 100 Larven des ersten Stadiums besetzt. Einen Tag nach erfolgter Infektion werden die Knollen mit einer Acetonlösung bekannter Konzentration des Wirkstoffs besprüht. Die behandelten Kartoffelknollen werden in Becher aus Kunststoff eingebracht und in einer Atmosphäre von 60% relativer Luftfeuchtigkeit bei 25° C während 21 Tagen gelagert. Als Kontrollmaterial dienten mit reinem Aceton behandelte Knollen.

Das Ergebnis wird ausgedrückt als prozentuale Verminderung der überlebenden Larvenmenge im Vergleich zu der unbehandelten Probe.

| Dosierung ($10^{-x}$g a.i./cm$^2$) | x=6 | x=7 |
|---|---|---|
| | Aktivität (%) | |
| Verbindung des Beispiels 1 | 100 | 18 |
| Verbindung des Beispiels 4 | 100 | 9 |
| Cyhexatin | 19 | 0 |
| Tricyclohexylzinn-pentylmercaptid | 24 | 0 |

(Unbehandelte Probe: 4% Mortalität)

*Beispiel 10*

Bekämpfte Species: Adoxophyes orana, Sommerfrucht-Motte

Methode:

Es werden Blattscheiben (26 mm Durchmesser) von Apfelbäumen mit 10 Larven des ersten Stadiums infiziert. Die Scheiben werden sodann mit einer Acetonlösung bekannter Konzentration des Wirkstoffs besprüht und auf feuchtem Filterpapier in kleinen Kunststoffbechern in einer Atmosphäre von 60% relativer Luftfeuchtigkeit bei 25° C während 4 Tagen gelagert.

Als Kontrollmaterial dienten Proben, die nur mit Aceton behandelt waren.

| Dosierung ($10^{-x}$ a.i./cm$^2$) | x=6 | x=7 |
|---|---|---|
| | Aktivität (%) | |
| Verbindung des Beispiels 1 | 100 | 90 |
| Verbindung des Beispiels 4 | 100 | 20 |
| Cyhexatin | 8 | 0 |
| Tricyclohexylzinn-pentylmercaptid | 33 | 14 |

(Unbehandelte Probe: 3% Mortalität)

## Patentansprüche

1. Schwefelhaltige Tricyclohexylzinnverbindung der allgemeinen Formel

$$(C_6H_{11})_3-Sn-S-R,$$

worin R ein gerad- oder verzweigtkettiges Alkyl- oder Alkenyl mit 8 bis 25 C-Atomen ist, welches gegebenenfalls durch Halogen oder Nitrogruppen substituiert ist.

2. Schwefelhaltige Tricyclohexylzinnverbindung der allgemeinen Formel nach Anspruch 1, worin R ein gerad- oder verzweigtkettiges Alkyl oder Alkenyl mit 8 bis 15 C-Atomen ist, welches gegebenenfalls durch Halogen oder Nitrogruppen ist.

3. Verbindung nach den Ansprüchen 1 und 2, worin R der Dodecylrest ist.

4. Verbindung nach den Ansprüchen 1 und 2, worin R der Dipropylheptylrest ist.

5. Verbindung nach den Ansprüchen 1 und 2, worin R der Undecenylrest ist.

6. Verbindung nach den Ansprüchen 1 und 2, worin R der Octylrest ist.

7. Verwendung der Verbindungen nach den Ansprüchen 1 bis 6 als Schädlingsbekämpfungsmittel.

8. Schädlingsbekämpfungsmittel nach Anspruch 7, dadurch gekennzeichnet, dass es als Aktivkomponente
Tricyclohexylzinn-dodecylmercaptid,
Tricyclohexylzinn-dipropylheptylmercaptid,
Tricyclohexylzinn-undecenylmercaptid,
oder
Tricyclohexylzinn-octylmercaptid
enthält.

9. Schädlingsbekämpfungsmittel nach den Ansprüchen 7 und 8, dadurch gekennzeichnet, dass es die Aktivkomponente in einer Menge von 12 bis 80 bzw. 25 bis 50% enthält.

10. Schädlingsbekämpfungsmittel nach den Ansprüchen 7 bis 9, dadurch gekennzeichnet, dass es die Aktivkomponente in Mischung mit Träger- und/oder Hilfsstoffen enthält.

11. Anwendung des Mittels nach den Ansprüchen 7 bis 10 zur Bekämpfung von Acarinen und Insekten, insbesondere Milben und Zecken.

12. Verfahren zur Herstellung von schwefelhaltigen Tricyclohexylzinnverbindungen der allgemeinen Formel $(C_6H_{11})_3$ Sn – S –R nach Anspruch 1 und 2, dadurch gekennzeichnet, dass ein Tricyclohexylzinnhalogenid mit einem gerad- oder verzweigtkettigen Alkyl- oder Alkylenmercaptan mit 8 bis 25, vorzugsweise 8 bis 15 C-Atomen, welches ggf. durch Halogen oder Nitrogruppen substituiert ist, in einem nicht reaktiven flüssigen Medium in Gegenwart eines alkalischen Kondensationsmittels unter Rühren zur Reaktion gebracht wird, das Reaktionsprodukt in organischem Lösungsmittel aufgenommen und aus der gereinigten und getrockneten Lösung des Mercaptids das organische Lösungsmittel abgetrennt wird.

13. Verfahren nach Anspruch 12, dadurch gekennzeichnet, dass Tricyclohexylzinnchlorid mit Octylmercaptan, Undecenylmercaptan, Dipropylheptylmercaptan oder Dodecylmercaptan zur Reaktion gebracht wird.

14. Verfahren nach den Ansprüchen 12 und 13, dadurch gekennzeichnet, dass als alkalisches Kondensationsmittel Alkalihydroxid oder Triäthylamin, vorzugsweise Kaliumhydroxid, verwendet wird.

15. Verfahren nach den Ansprüchen 12 bis 14, dadurch gekennzeichnet, dass als nicht reaktives flüssiges Medium Wasser, Aceton, Benzol oder Mischungen davon verwendet werden.

## Claims

1. A sulfur-containing tricyclohexyltin compound of the general formula

$$(C_6H_{11})_3Sn\text{–}SR$$

wherein R is a straight or branched chain alkyl or alkenyl which has 8 to 25 carbon atoms and which may be susbstituted by halo or nitro groups.

2. A sulfur-containing tricyclohexyltin compound having the general formula stated in claim 1, wherein R is a straight or branched chain alkyl or alkenyl which has 8 to 15 carbon atoms and which may be substituted by halo or nitro groups.

3. A compound according to claims 1 and 2, wherein R is the dodecyl group.

4. A compound according to claims 1 and 2, wherein R is the dipropylheptyl group.

5. A compound according to claims 1 and 2, wherein R is the undecenyl group.

6. A compound according to claims 1 ans 2, wherein R is the octyl group.

7. The use of the compounds according to claims 1 to 6 as a pesticide.

8. A pesticide according to claim 7, characterized in that it contains
tricyclohexyltin dodecyl mercaptide,
tricyclohexyltin dipropylheptyl mercaptide,
tricyclohexyltin undecenyl mercaptide or
tricyclohexyltin octyl mercaptide,
as an active ingredient.

9. A pesticide according to claims 7 and 8, characterized in that it contains the active ingredient in a proportion of 12 to 80%, preferably 25 to 50%.

10. A pesticide according to claims 7 to 9, characterized in that it contains the active ingredient in a mixture with carrier substances and adjuvants.

11. The use of the pesticide according to claims 7 to 10 for the control of acarina and insects, particularly mites and ticks.

12. A process of producing sulfur-containing tricyclohexyltin compounds of the general formula $(C_6H_{11})_3-Sn-S-R$ according to claims 1 and 2, characterized in that a tricyclohexyltin halide is reacted with a straight or branched chain alkyl or alkylene mercaptan having 8 to 25, preferably 8 to 15 carbon atoms, which may be substituted by

halo or nitro groups, in a non-reactive liquid medium with stirring and in the presence of an alkaline condensing agent, the reaction product is dissolved in an organic solvent, and the organic solvent is separated from the purified and dried solution of the mercaptide.

13. A process according to claim 12, characterized in that tricyclohexyltin chloride is reacted with octyl mercaptan, undecyl mercaptan, dipropylheptyl mercaptan or dodecyl mercaptan.

14. A process according to claims 12 and 13, characterized in that alkali hydroxide or triethylamine, preferably potassium hydroxide, is used as an alkaline condensing agent.

15. A process according to claims 12 to 14, characterized in that water, acetone, benzene or mixtures thereof are used as a non-reactive liquid medium.

## Revendications

1. Composé tricyclohexylstannique soufré de formule développée

$$(C_6H_{11})_3-Sn-S-R,$$

dans laquelle R est un alcoyle ou un alcényle linéaire ou ramifié ayant de 8 à 25 atomes de carbone, qui est éventuellement substitué par halogène ou par groupe nitro.

2. Composé tricyclohexylstannique soufré de formule développée suivant la revendication 1, dans laquelle R est un alcoyle ou un alcényle linéaire ou ramifié ayant de 8 à 15 atomes de carbone, qui est éventuellement substitué par halogène ou par groupe nitro.

3. Composé suivant les revendications 1 et 2, dans lequel R est le radical dodécyle.

4. Composé suivant les revendications 1 et 2, dans lequel R est le radical dipropylheptyle.

5. Composé suivant les revendications 1 et 2, dans lequel R est le radical undécényle.

6. Composé suivant les revendications 1 et 2, dans lequel R est le radical octyle.

7. Utilisation des composés suivant les revendications 1 à 6, comme pesticide.

8. Pesticide suivant la revendication 7, caractérisé en ce qu'il contient comme constituants actifs

– du dodécylthiolate de tricyclohexylétain,

– du diprophylheptylthiolate de tricyclohexylétain,

– de l'undécénylthiolate de tricyclohexylétain, ou

– de l'octylthiolate de tricyclohexylétain.

9. Pesticide suivant les revendications 7 et 8, caractérisé en ce qu'il contient les constituants actifs en une quantité de 12 à 80 ou de 25 à 50%.

10. Pesticide suivant les revendications 7 à 9, caractérisé en ce qu'il contient les constituants actifs en mélange avec des supports et/ou des adjuvants.

11. Utilisation de l'agent suivant les revendications 7 à 10 pour lutter contre les acariens et les insectes, notamment contre les mites et les tiques.

12. Procédé de préparation de composés tricyclohexylstanniques soufrés de formule développée $(C_6H_{11})_3-Sn-S-R$, suivant les revendications 1 et 2, caractérisé en ce qu'il consiste à faire réagir sous agitation un halogénure d'étaintricyclohexyle sur un alcoylthiol ou sur un alcoylènethiol linéaire ou ramifié ayant de 8 à 25 et, de préférence, de 8 à 15 atomes de carbone, qui, le cas échéant, est substitué par un halogène ou par un groupe nitro, dans un milieu liquide non réactif en présence d'un agent de condensation alcalin, à reprendre le produit de réaction dans un solvant organique, et à séparer le solvant organique de la solution du thiol purifiée et séchée.

13. Procédé suivant la revendication 12, caractérisé en ce qu'il consiste à faire réagir le chlorure d'étaintricyclohexyle sur de l'octylthiol, de l'undécénylthiol, du dipropylheptylthiol ou du dodécylthiol.

14. Procédé suivant les revendications 12 et 13, caractérisé en ce qu'il consiste à utiliser comme agent de condensation alcalin un hydroxyde de métal alcalin ou la triéthylamine, de préférence l'hydroxyde de potassium.

15. Procédé suivant les revendications 12 à 14, caractérisé en ce qu'il consiste à utiliser comme milieu liquide non réactif de l'eau, de l'acétone, du benzène, ou leurs mélanges.